# EUROPÄISCHE PATENTSCHRIFT

(11) **EP 2 039 845 B1**
(45) Veröffentlichungstag und Bekanntmachung des Hinweises auf die Patenterteilung: **30.08.2017**
(21) Anmeldenummer: 08105227.6
(22) Anmeldetag: 04.09.2008
(51) Int. Cl.: E04B 1/76

(54) **Befestigungselement für die Befestigung von Dämmstoffplatten an einer Unterkonstruktion**
Mounting element for attaching insulation boards to a substructure
Elément de fixation pour la fixation de plaques de matériau isolant sur un sous-sol

(30) Priorität: 20.09.2007 DE 102007000759
(43) Veröffentlichungstag der Anmeldung: 25.03.2009
(73) Patentinhaber: HILTI Aktiengesellschaft, 9494 Schaan (LI)
(72) Erfinder: Spröwitz, Michael, 6800, Feldkirch-Tisis (AT); Zimmerer, Claudia, 88131, Lindau (DE)
(74) Vertreter: Hilti Aktiengesellschaft Corporate Intellectual Property

(56) Entgegenhaltungen:
- EP-A2- 1 298 331
- WO-A1-02/12737
- DE-U1- 20 320 553
- GB-A- 2 389 158

## Beschreibung

Die Erfindung betrifft ein Befestigungselement für die Befestigung von Dämmstoffplatten an einer Unterkonstruktion aufweisend einen Schaft, der in einem Endbereich ein Halteteil zur Befestigung der Dämmstoffplatte und in dem das Halteteil aufweisenden Endbereich des Schafts eine zur Stirnseite des Schafts offene Drehmitnahme für ein Setzwerkzeug aufweist, wobei die Drehmitnahme einen mehrlappigen, lichten Querschnitt aufweist, der durch eine in Umfangsrichtung abwechselnde Anordnung von benachbarten Eingreifnuten und Eingreiflappen gebildet ist, die entlang der Längsachse des Schafts verlaufen, wobei der lichte Querschnitt der Drehmitnahme eine Querschnittsverengung aufweist, welche von einem sich entgegen der Richtung des offenen Endes der Drehmitnahme konisch verjüngenden Abschnitt der Drehmitnahme gebildet ist.

Zur Befestigung von Dämmstoffplatten, beispielsweise eines Wärmedämm-Verbundsystems, an einer Unterkonstruktion, wie z. B. an einer Wand aus Beton, Mauerwerk oder Holz, werden als Befestigungselemente Kunststoffdübel mit einem Halteteil verwendet.

Aus der DE 101 59 632 A1 ist ein Befestigungselement bekannt, das einen sich entlang einer Längsachse erstreckenden Schaft aufweist, der an einem Ende eine als Innentorx ausgebildete Drehmitnahme für ein Setzwerkzeug und ein Halteteil für die Dämmstoffplatte aufweist. Zum Setzen des Befestigungselementes wird dieses in ein zuvor durch den Dämmstoff in die Unterkonstruktion erstelltes Bohrloch eingeführt und mittels des Setzwerkzeugs, das in die Drehmitnahme eingreift, drehend gesetzt, wobei der Dämmstoff bereichsweise von am Umfang des Halteteils angeordneten Schneiden angeschnitten und das Halteteil im Dämmstoff versenkt wird.

Nachteilig an der bekannten Lösung ist, dass das Befestigungselement vor dem Einführen in das Bohrloch von dem Setzwerkzeug abgleiten kann. Bei einer Fassadenisolation mit Dämmstoffplatten müssen eine Vielzahl von Befestigungselementen teilweise in grosser Höhe über Boden gesetzt werden. Gleitet das Befestigungselement von dem Setzwerkzeug ab, fällt dieses gegebenenfalls ausserhalb der Reichweite des Anwenders hinunter und muss durch ein anderes Befestigungselement ersetzt werden. Auch wenn das Befestigungselement in Reichweite des Anwenders niederfällt, muss dieses nochmals auf das Setzwerkzeug aufgesetzt werden. Dieser zusätzliche Arbeitsschritt verlängert insbesondere den zeitlichen Aufwand zur Erstellung der Befestigungen massgeblich.

Die EP 1 298 331 A2 offenbart einen Schraubdübel zum Einschrauben in Leichtbaustoffe, der einen hülsenförmigen, von einem Gewinde umschlossenen Dübelkörper, rückseitig einen Flansch, im Bereich seines vorderen Endes mindestens einen Schneidzahn, entlang seiner Innenwand eine durch mehrere Längsrippen gebildete Innenprofilierung für das Einschneiden des Gewindes eines Befestigungselementes und in seinem Flansch eine profilierte Ausnehmung für die Kopplung mit einer Eingriffsprofilierung eines Setzwerkzeuges aufweist, wobei die profilierte Ausnehmung im Bereich des Flansches eine zum Eingriff mit der standardisierten Sechskantprofilierung eines Bitwerkzeuges geeignete Profilierung aufweist, und wobei die Längsrippen der Innenprofilierung in Umfangsrichtung mit mindestens zwei verschiedenen Abständen voneinander angeordnet sind, für die wahlweise Aufnahme eines zwei-, vier oder sechskantigen Eingriffskopf des Bitwerkzeuges zwischen ihnen.

Die WO 02/12737 A beschreibt einen Dübel, insbesondere für Leichtbaustoffe, mit einer Dübelhülse, einem Gewinde an der Aussenseite der Dübelhülse und einer Innenöffnung, die von der Vorderseite der Dübelhülse her zugänglich ist und zur Aufnahme einer Schraube ausgebildet ist, wobei der vordere Teil der Innenöffnung die Form einer Sechskantvertiefung aufweist.

Aufgabe der Erfindung ist es, ein gattungsgemässes Befestigungselement zu schaffen, das eine unaufwändige Montage jedes einzelnen Befestigungselementes gewährleistet.

Die Aufgabe ist durch die Merkmale des unabhängigen Anspruchs 1 gelöst. Vorteilhafte Weiterbildungen sind in den Unteransprüchen dargelegt.

Ein erfindungsgemässes Befestigungselement ist dadurch gekennzeichnet, dass der sich konisch verjüngende Abschnitt von zumindest einem in der Höhe bereichsweise zunehmenden Eingreiflappen gebildet ist.

Gemäss der Erfindung weist der lichte Querschnitt eine Querschnittsverengung auf.

Beim Einführen eines Setzwerkzeuges wirkt eine Klemmkraft zwischen dem entsprechenden Abschnitt des Setzwerkzeuges und der Drehmitnahme am Befestigungselement, wodurch das Befestigungselement bis zum Setzen in die Unterkonstruktion sicher am Setzwerkzeug gehalten ist. Es sind zwar Setzwerkzeuge mit einer Drehmitnahme bekannt, die als Einführhilfe in die Drehmitnahme am Befestigungselement bereichsweise einen konischen Abschnitt aufweisen, dabei wird jedoch keine zwischen dem Setzwerkzeug und dem Befestigungselement wirkende Klemmkraft erzeugt. Da der Anwender beim erfindungsgemässen Befestigungselement jedes Befestigungselement jeweils nur einmal an dem Setzwerkzeug anordnen muss, verringert sich insbesondere der zeitliche Aufwand zur Befestigung von Dämmstoffplatten, was zu einer höheren Effizienz und Produktivität führt.

Die Drehmitnahme ist beabstandet zu dem Ende des Schafts angeordnet, so dass zum freien Ende eine ebenfalls zu diesem offene Aufnahme ausgebildet ist.

Unter einer Querschnittsverengung wird eine Verringerung des lichten Querschnitts der Drehmitnahme entlang der Längsachse des Schafts verstanden.

Erfindungsgemäss ist die Querschnittsverengung von einem sich entgegen der Richtung des offenen Endes der Drehmitnahme konisch verjüngenden Abschnitt der Drehmitnahme gebildet, der eine vorteilhafte Klemmwirkung zwischen dem Setzwerkzeug und dem Befestigungselement gewährleistet, wobei das Befestigungselement trotzdem einfach zu fertigen ist. Vorteilhaft ist das Befestigungselement aus einem Kunststoff in einem Spritzgussverfahren gefertigt. Der konische Abschnitt führt zu keinen Problemen bei der Entformung des Befestigungselementes nach dem erfolgten Spritzvorgang.

Erfindungsgemäss ist der sich konisch verjüngende Abschnitt von zumindest einem in der Höhe bereichsweise zunehmenden Eingreiflappen gebildet, der den lichten Querschnitt der Drehmitnahme entlang der Längsachse des Schafts verringert. Diese Ausgestaltung gewährleistet eine vorteilhafte Klemmwirkung zwischen dem Setzwerkzeug und dem Befestigungselement, wobei das Befestigungselement weiterhin einfach zu fertigen ist. Vorzugsweise ist der sich konisch verjüngende Abschnitt von zumindest einer in der Nuttiefe bereichsweise kleiner werdenden Eingreifnute gebildet, die den lichten Querschnitt der Drehmitnahme entlang der Längsachse des Schafts verringert. Diese Ausgestaltung gewährleistet ebenfalls eine vorteilhafte Klemmwirkung zwischen dem Setzwerkzeug und dem Befestigungselement, wobei das Befestigungselement weiterhin einfach zu fertigen ist.

In einer Variante dazu sind in einer Drehmitnahme in der Höhe bereichsweise zunehmenden Eingreiflappen und in der Tiefe bereichsweise abnehmenden Eingreifnuten vorgesehen. Die sich konisch verjüngenden Abschnitte der Drehmitnahme sind vorteilhaft abwechselnd in einem gleichmässigen Raster an den Eingreiflappen und an den Eingreifnuten vorgesehen.

Der sich konisch verjüngende Abschnitt ist vorteilhaft an einem Rücken oder einer Flankenseite der Eingreiflappen und/oder an dem Nutengrund der Eingreifnuten vorgesehen. In einer alternativen Ausführung erstreckt sich der konisch verjüngende Abschnitt über den Rücken bis auf zumindest eine Flankenseite der Eingreiflappen beziehungsweise über den Nutengrund der Eingreifnuten. Weiter vorteilhaft erstreckt sich der konische Abschnitt jeweils von einem axialen Ende bis zum anderen axialen Ende der Drehmitnahme entlang der Längsachse des Schafts.

Bevorzugt ist ein zylindrischer Abschnitt mit einer parallel zur Längsachse des Schafts verlaufenden Ausgestaltung in der Drehmitnahme vorgesehen, wobei zwischen dem zylindrischen Abschnitt und dem konischen Abschnitt der Drehmitnahme ein kontinuierlich verlaufender Übergang vorgesehen ist, der z. B. eine vorteilhafte Führung des Setzwerkzeuges beim Eindringen in die Drehmitnahme ermöglicht.

In einer nicht von Anspruch 1 umfassten Ausgestaltung ist die Querschnittsverengung von zumindest einem in der Drehmitnahme angeordneten Halteelement gebildet, welches den lichten Querschnitt der Drehmitnahme entlang der Längsachse des Schafts bereichsweise verengt. Vorteilhaft sind mehrere Halteelemente innerhalb einer Drehmitnahme vorgesehen. Die Halteelemente ragen in die Axialprojektion der Drehmitnahme mit dem zylindrischen Abschnitt hinein.

Bevorzugt ist das zumindest eine Halteelement an einem Eingreiflappen vorgesehen und verengt den lichten Querschnitt der Drehmitnahme teilweise in diesem Bereich.

Vorzugsweise ist das zumindest eine Halteelement an einer Eingreifnute vorgesehen und verengt den lichten Querschnitt der Drehmitnahme teilweise in diesem Bereich.

In einer Variante dazu sind mehrere Halteelemente in einer Drehmitnahme vorgesehen, wobei ein Teil der Halteelemente an den Eingreiflappen und ein Teil an den Eingreifnuten vorgesehen sind.

Bevorzugt ist das zumindest eine Halteelement rippenförmig und erstreckt sich entlang der Längsachse des Schafts, was eine einfache Fertigung, insbesondere in einem Spritzgussverfahren, des Befestigungselementes ermöglicht. Das zumindest eine Halteelement erstreckt sich vorteilhaft beabstandet zum offenen Ende der Drehmitnahme bis zum Grund der Drehmitnahme, welcher gleichzeitig einen Anschlag für das Setzwerkzeug bildet.

Die Erfindung wird nachstehend anhand von Ausführungsbeispielen näher erläutert. Es zeigen:
- Fig. 1: Ein Befestigungselement in Seitenansicht;
- Fig. 2: ein erstes Ausführungsbeispiel einer Drehmitnahme für ein Setzwerkzeug im Grundriss;
- Fig. 3: einen Schnitt durch die Drehmitnahme gem. Linie III-III in Fig. 2;
- Fig. 4: ein zweites, nicht von Anspruch 1 erfasstes Ausführungsbeispiel einer Drehmitnahme für ein Setzwerkzeug im Grundriss; und
- Fig. 5: einen Schnitt durch die Drehmitnahme gem. Linie V-V in Fig. 4.

Grundsätzlich sind in den Figuren gleiche Teile mit den gleichen Bezugszeichen versehen.

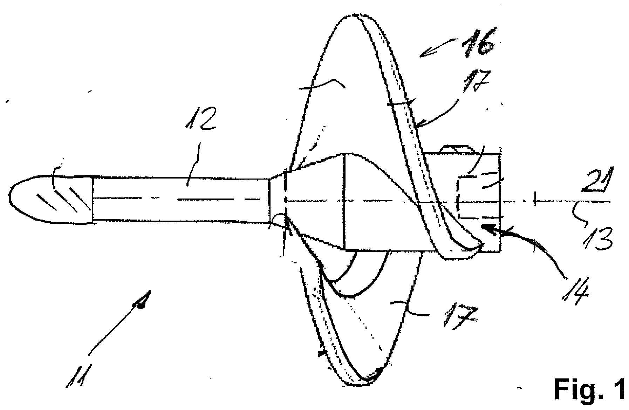

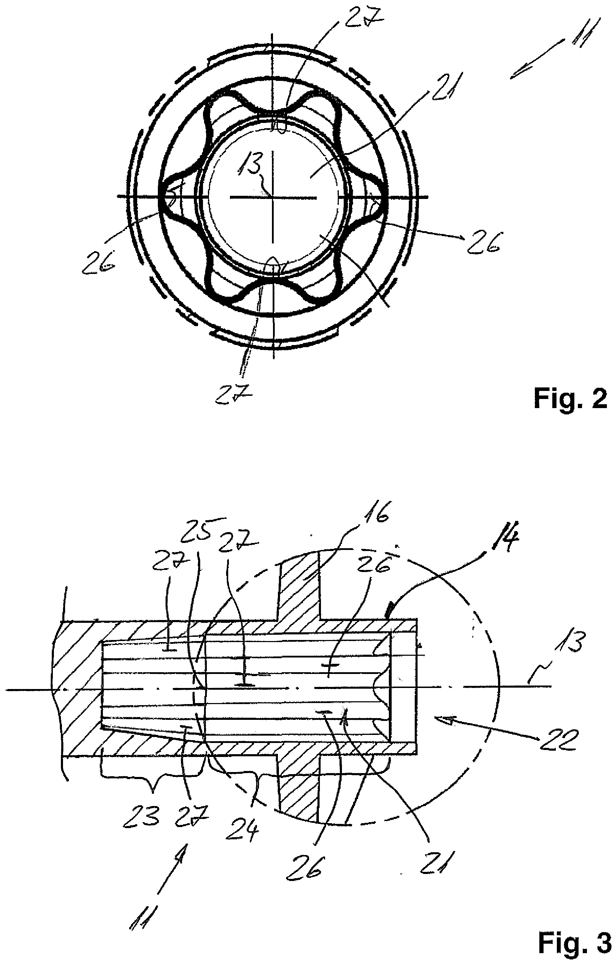

Das in den Figuren 1 bis 3 dargestellte Befestigungselement 11 für die Befestigung von Dämmstoffplatten an einer Unterkonstruktion weist einen Schaft 12 auf, der an einem Endbereich 14 ein Halteteil 16 zur Befestigung der Dämmstoffplatte und in dem das Halteteil 16 aufweisenden Endbereich 14 eine zur Stirnseite des Schafts 12offene Drehmitnahme 21 für ein hier nicht dargestelltes Setzwerkzeug aufweist. Das Halteteil 16 ist von zwei sichelförmig verlaufenden Wendelgängen 17 gebildet.

Die Drehmitnahme 21 weist ein offenes Ende 22 auf, das beabstandet zur Stirnseite des Schafts 12 angeordnet ist. Die Drehmitnahme 21 weist einen mehrlappigen, lichten Querschnitt auf, der durch eine in Umfangsrichtung abwechselnde Anordnung von benachbarten Eingreifnuten 26 und Eingreiflappen 27 gebildet ist, die bereichsweise parallel entlang der Längsachse 13 des Schafts 12 verlaufen. Der lichte Querschnitt weist beabstandet zum offenen Ende 22 der Drehmitnahme 21 bereichsweise eine Querschnittsverengung auf. Die Querschnittsverengung ist von einem sich entgegen der Richtung des offenen Endes 22 der Drehmitnahme 21 konisch verjüngenden Abschnitt 23 der Drehmitnahme 21 gebildet, der sich an einen im Wesentlichen zylindrischen Abschnitt 24 der Drehmitnahme 21 anschliesst. Der sich konisch verjüngende Abschnitt 23 ist einerseits von in der Höhe bereichsweise zunehmenden Eingreiflappen 27 und andererseits von in der Nuttiefe bereichsweise kleiner werdenden Eingreifnuten 26 gebildet. Zwischen dem zylindrischen Abschnitt 24 und einem konischen Abschnitt 23 der Drehmitnahme 21 ist ein kontinuierlich verlaufender Übergang 25 vorgesehen.

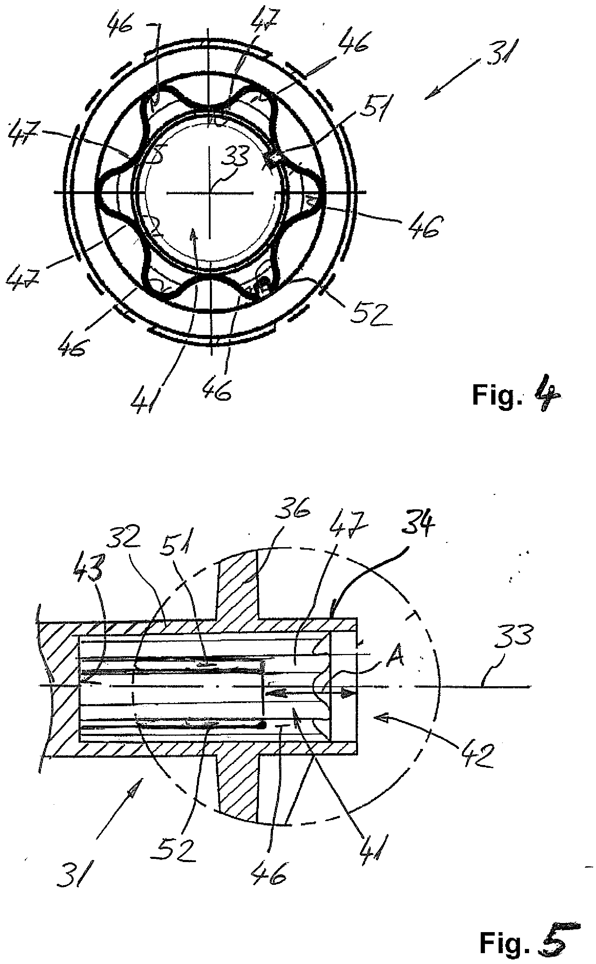

Das in den Figuren 4 und 5 dargestellte Befestigungselement 31 unterscheidet sich von dem zuvor beschriebenen Befestigungselement 11 durch die Ausgestaltung der bereichsweisen Querschnittsverengung der Drehmitnahme 41. Die Drehmitnahme 41 ist zu der Stirnseite im Endbereich 34 des Schafts 32 offen ausgebildet. In der Drehmitnahme 41 sind zwei Halteelemente 51 und 52 vorgesehen, welche den lichten Querschnitt der Drehmitnahme 41 entlang der Längsachse 33 des Schafts 32 bereichsweise verengen. Das Halteelement 51 ist an einem der Eingreiflappen 47 und das Halteelement 52 ist in einer der Eingreifnuten 46 vorgesehen. Die Halteelemente 51 und 52 sind rippenförmig ausgebildet und erstrecken sich entlang der Längsachse 33 des Schafts 32, in einem Abstand A von dem offenen Ende 42 bis zu dem Grund 43 der Drehmitnahme 41.

## Patentansprüche

1. Befestigungselement für die Befestigung von Dämmstoffplatten an einer Unterkonstruktion aufweisend einen Schaft (12; 32), der in einem Endbereich (14; 34) ein Halteteil (16; 36) zur Befestigung der Dämmstoffplatte und in dem das Halteteil (16; 36) aufweisenden Endbereich (14; 34) des Schafts (12; 32) eine zur Stirnseite des Schafts (12; 32) offene Drehmitnahme (21; 41) für ein Setzwerkzeug aufweist, wobei
die Drehmitnahme (21; 41) einen mehrlappigen, lichten Querschnitt aufweist, der durch eine in Umfangsrichtung abwechselnde Anordnung von benachbarten Eingreifnuten (26; 46) und Eingreiflappen (27; 47) gebildet ist, die entlang der Längsachse (13; 33) des Schafts (12; 32) verlaufen, wobei
der lichte Querschnitt der Drehmitnahme (21; 41) eine Querschnittsverengung aufweist, welche von einem sich entgegen der Richtung des offenen Endes (22) der Drehmitnahme (21) konisch verjüngenden Abschnitt (23) der Drehmitnahme (21) gebildet ist,
**dadurch gekennzeichnet, dass**
der sich konisch verjüngende Abschnitt (23) von zumindest einem in der Höhe bereichsweise zunehmenden Eingreiflappen (27) gebildet ist.

2. Befestigungselement nach Anspruch 1, **dadurch gekennzeichnet, dass** der sich konisch verjüngende Abschnitt (23) von zumindest einer in der Nuttiefe bereichsweise kleiner werdenden Eingreifnute (26) gebildet ist.

3. Befestigungselement nach einem der Ansprüche 1 oder 2, **dadurch gekennzeichnet, dass** ein zylindrischer Abschnitt (24) in der Drehmitnahme (21) vorgesehen ist, wobei zwischen dem zylindrischen Abschnitt (24) und dem konischen Abschnitt (23) der Drehmitnahme (21) ein kontinuierlich verlaufender Übergang (25) vorgesehen ist.

## Claims

1. Fastening element for fastening insulating boards to a substructure, comprising a shank (12; 32) provided in an end region (14; 34) with a retaining part (16; 36) for fastening the insulating board and in the end region (14; 34) of the shank (12; 32) having the retaining part (16; 36) with a rotary drive means (21; 41) for a setting tool, said rotary drive means being open towards the end face of the shank (12; 32), wherein
the rotary drive means (21; 41) has a clear cross section with a plurality of tabs, said clear cross section being formed by an arrangement of adjacent engagement grooves (26; 46) and engagement tabs (27; 47) alternating in the circumferential direction and extending along the longitudinal axis (13; 33) of the shank (12; 32) and wherein
the clear cross section of the rotary drive means (21; 41) has a cross-sectional reduction formed by a portion (23) of the rotary drive means (21) tapering in the opposite direction to that of the open end (22) of the rotary drive means (21), **characterised in that**
the tapering portion (23) is formed by at least one engagement tab (27) the height of which increases at least in some areas.

2. Fastening element according to claim 1, **characterised in that** the tapering portion (23) is formed by at least one engagement groove (26) the depth of which decreases at least in some areas.

3. Fastening element according to either of claims 1 or 2, **characterised in that** a cylindrical portion (24) is provided in the rotary drive means (21), a continuously extending transition (25) being provided between the cylindrical portion (24) and the conical portion (23) of the rotary drive means (21).

## Revendications

1. Elément de fixation pour la fixation de panneaux d'isolation sur une sous-structure (60), ayant une tige (12 ; 32) qui comporte, dans une zone d'extrémité (14 ; 34), une pièce de retenue (16 ; 36) pour fixer le panneau d'isolation, et, dans la zone d'extrémité (14 ; 34) de la tige (12 ; 32) comportant la pièce de retenue (16 ; 36), un élément d'entraînement en rotation (21 ; 41) ouvert vers la face avant de la tige (12 ; 32) pour un outil de pose,
dans lequel l'élément d'entraînement en rotation (21 ; 41) a une section transversale intérieure à plusieurs lobes qui est formée par un agencement alterné dans une direction circonférentielle de rainures de prise (26 ; 46) et de lobes de prise (27 ; 47) adjacents qui s'étendent le long de l'axe longitudinal (13 ; 33) de la tige (12 ; 32),
dans lequel la section transversale intérieure de l'élément d'entraînement en rotation (21 ; 41) comporte un rétrécissement de section tranversale qui est formé par une partie (23) de l'élément d'entraînement en rotation (21) se rétrécissant de manière conique à l'opposé de la direction de l'extrémité ouverte (22) de l'élément d'entraînement en rotation (21),
**caractérisé en ce que**
la partie (23) se rétrécissant de manière conique est formée par au moins un lobe de prise (27) dont la hauteur augmente par endroits.

2. Elément de fixation selon la revendication 1, **caractérisé en ce que** la partie (23) se rétrécissant de manière conique est formée par au moins une rainure de prise (26) qui devient plus petite par endroits dans la profondeur de rainure.

3. Elément de fixation selon l'une des revendications 1 ou 2, **caractérisé en ce qu'**une partie cylindrique (24) est prévue dans l'élément d'entraînement en rotation (21), dans lequel une transition (25) s'étendant de manière continue est prévue entre la partie cylindrique (24) et la partie conique (23) de l'élément d'entraînement en rotation (21).
